# EUROPEAN PATENT SPECIFICATION

(11) **EP 2 160 947 B1**
(45) Date of publication and mention of the grant of the patent: **06.07.2011**
(21) Application number: 09011258.2
(22) Date of filing: 02.09.2009
(51) Int. Cl.: A21C 11/00

(54) **Head and apparatus for calibrating edible doughs**
Kalibrierkopf und -apparat für essbaren Teig
Tête et dispositif pour calibrer de la pâte comestible

(30) Priority: 05.09.2008 IT VI20080209
(43) Date of publication of application: 10.03.2010
(73) Proprietor: Iteca S.p.A., 37050 Palu (VR) (IT)
(72) Inventor: Benetti, Luigi, 37031 Illasi Verona (IT)
(74) Representative: Autuori, Angelo

(56) References cited:
- EP-A- 0 471 095
- US-A- 3 109 390
- US-A- 4 690 043
- US-B1- 6 364 653

## Description

### Field of invention

The present invention generally finds application in food processing industry, and particularly relates to a dough disk calibrating head, particularly for use with pizza bases or the like. The invention further relates to a calibrating apparatus comprising a plurality of such calibrating heads.

### Background art

The industrial process for forming dough disks, such as pizza or the like, comprises a plurality of sequential steps to form an initial substantially spherical or amorphous dough into a final disk shape.

Typically, dough portions are first pressed and then sheeted to assume the requested disk shape.

Nevertheless, the disk elements do not always have a regular geometry at the end of the forming process, and require an additional calibration step to obtain a standard-sized final product.

Final product standardization is particularly desired when the product is designed to be packaged in special trays, generally made of plastic.

Such trays are typically formed by thermoplastic molding and have a predetermined and constant geometry, whereby calibration of final product size is required to allow packaging and avoiding high scrap rates.

A further requirement is for highly versatile plants, allowing production of final products of various sizes, to fulfill the needs of consumers in different countries.

A number of apparatus are known in the art for final calibration of dough disk elements, which are aimed at forming a disk element to a diameter falling with a well defined and controlled range.

For instance, machines are known which have a processing head with two or more successive profiles that together form a circumference, each driven by a pneumatic actuator.

This calibrating apparatus suffers from a number of drawbacks, and particularly does not allow control of the final size of the output product, because actuators discriminate in- or out- end configurations only and always provide the same size.

Furthermore, the profiles consist of sectors that are clamped onto the disk element and pinch the dough as they contact it, thereby causing peripheral defects.

A further drawback is that, during processing, synchronism of actuators may be affected by dirt accumulating during operation or due to malfunctioning of the pneumatic system, thereby causing wrong processing.

A similar solution is disclosed for instance in EP1707053, which describes a dough processing apparatus in which final calibration is performed by a pair of dies, each defining a semicircular shape.

The dies are moved in a horizontal direction between a rest position, in which the two dies are separated and far from the dough, and a work position in which the two dies have their ends in mutual contact to define the final diameter of the product.

This provides a pizza edge thicker than the central area, thereby providing a final product shape recalling a home-made product.

Nevertheless, also in this case, potential local damage is caused on the dough at the contact ends of the semicircular dies.

A further available prior art solution, known e.g. from the document US-A-6364653, provides a rotating cam between actuator and calibrating members for synchronized movement of the members to peripherally touch the pizza edge until it reaches the desired size.

An apparent drawback common to the above arrangements, is that no size change is allowed and that, in case of markedly irregular product geometry or improper positioning, the dough may be processed in a wrong manner, and be often rolled upon itself.

From US-A-4690043 an apparatus is known having all the features of the preamble of the independent claim 1.

### Disclosure of the invention

The object of the present invention is to overcome the above drawbacks, by providing a dough disk calibrating head that is highly efficient and relatively cost-effective.

A particular object is to provide a calibrating head that affords high versatility and allows change of the size of the product being processed, to obtain final products with diameters selected within a relatively wide range.

A further object is to provide a calibrating head that can operate on the dough without damaging it.

Yet another object is to provide a calibrating head that operates on the dough through a plurality of synchronized calibrator members to obtain a regularly shaped final product.

Another important object of the present invention is to provide a disk dough calibrating apparatus having a plurality of mutually synchronized calibrating heads of the present invention, to ensure high throughput and output product standardization.

These and other objects, as better explained hereafter, are fulfilled by a calibrating head as defined in claim 1.

With this particular configuration, the head of the invention provides a final product, such as a pizza base or the like, having a diameter selected within a relatively wide range.

Furthermore, the same head may be used to obtain finished or semifinished products of different diameters, thereby ensuring high versatility of the line in which the calibrating head is designed to be used.

In another aspect of the invention, a calibrating apparatus is provided, as defined in claim 10, which comprises a plurality of calibrating heads of the invention aligned in a predetermined direction and actuating means that drive the motion imparting means for moving the calibrating heads, said actuating means having a common output shaft and a slider-crank mechanism designed to connect said output shaft to the input shafts of each of said calibrating heads for synchronized transfer of motion to said calibrating members.

This particular configuration of the invention provides a calibrating apparatus that ensures a considerably lower scrap rate and high product size standardization.

### Brief description of the drawings

Further features and advantages of the invention will be more apparent from the detailed description of a preferred, non-exclusive embodiment of a calibrating head of the invention and an apparatus comprising a plurality of such heads, which are described as a non-limiting example with the help of the annexed drawings, in which:
FIG. 1 is a perspective view of a calibrating head of the invention;
FIG. 2 is a top view of the calibrating head of Fig. 1, with certain elements being omitted, in a first operating condition;
FIG. 3 is a top view of the calibrating head of Fig. 1, with certain elements being omitted, in a second operating condition;
FIG. 4 is an enlarged top view of a detail of the calibrating head of Fig. 1;
FIG. 5 is a first cross-sectional side view of the calibrating head of Fig. 1;
FIG. 6 is a second cross-sectional partial view of the calibrating head of Fig. 1;
FIG. 7 is a front view of a calibrating apparatus of the invention;
FIG. 8 is a perspective view of a detail of the apparatus of Fig. 7.

### Detailed description of a preferred embodiment

Referring to the above figures, the calibrating head of the invention, generally designated by numeral 1, may be advantageously incorporated in a dough processing line, particularly for producing pizza or the like, not shown.

For instance, the line may be designed to carry out a number of sequential steps to process the dough from an amorphous o spheroidal shape to the final disk shape, using any known operating method.

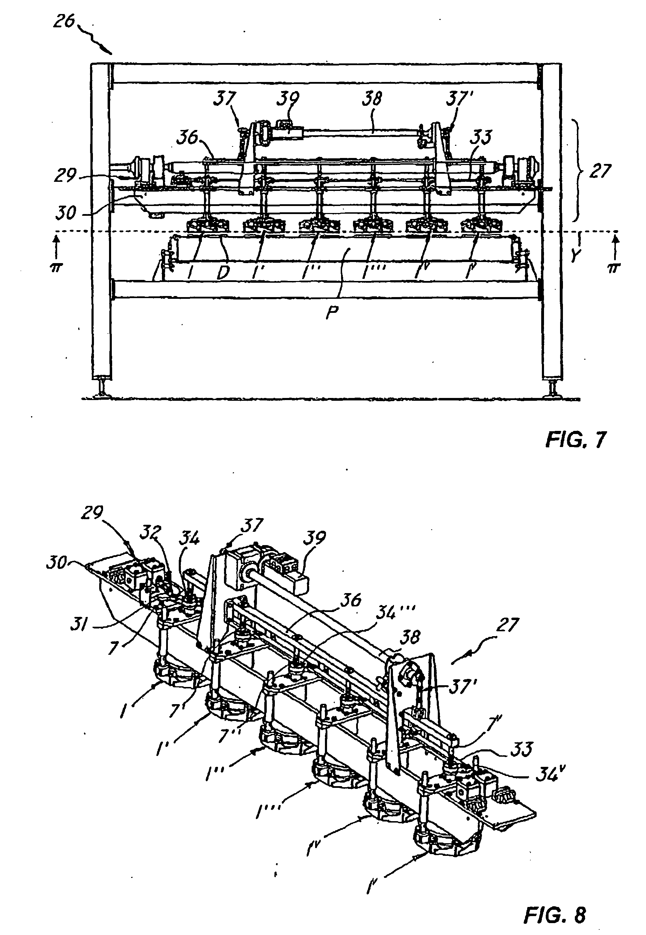

The dough disk-like element D may be preferably placed on a movable or stationary working plane P, as shown in Fig 7, and be selectively moved all along the appropriately disposed workstations.

The disk-like element D may reach the calibration head 1 with a starting diameter resulting from the previous processing steps.

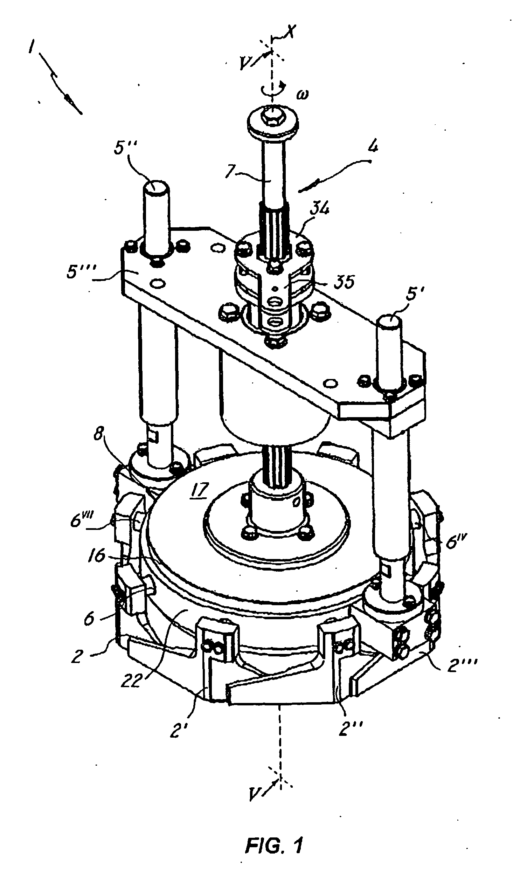

As shown in FIG. 1, a calibrating head 1 of the invention comprises a plurality of calibrating members 2, 2'. 2",... operably associated together and movable on a predetermined lying plane n above the work surface P.

Unless otherwise stated, the calibrating members 2, 2', 2", ... will be hereinafter designated by non-indexed numbers, all the features of the calibrating member 2 being intended to be found in a substantially similar manner in all the other calibrating members.

The calibrating members 2 have respective curvedly shaped surfaces 3 mutually aligned along a circumference of predetermined diameter.

Movement means 4 are further provided for moving the calibrating members 2 on the lying plane π, which are adapted to move the calibrating members 2 with respective predetermined radial strokes, between a first position in which the curved surfaces 3 define a circumference of maximum diameter φ_{MAX} and a second position in which the curved surfaces 3 define a circumference of minimum diameter φ_{MIN}.

Thus, the translations t of the calibrating members 2 will cause them to operate on the disk element D being processed to bring its diameter from the starting value to a calibrated end value.

According to a peculiar feature of the invention, such movement means 4 are designed to allow synchronized radial translations t of the calibrating members 2 to cover predetermined controlled radial distances sufficient to align said curvedly shaped surfaces 3 along a circumference that has a diameter of any value from the minimum value φ_{MIN} to the maximum value φ_{MAX} and corresponding to the predetermined calibrated diameter for the disk-like element D.

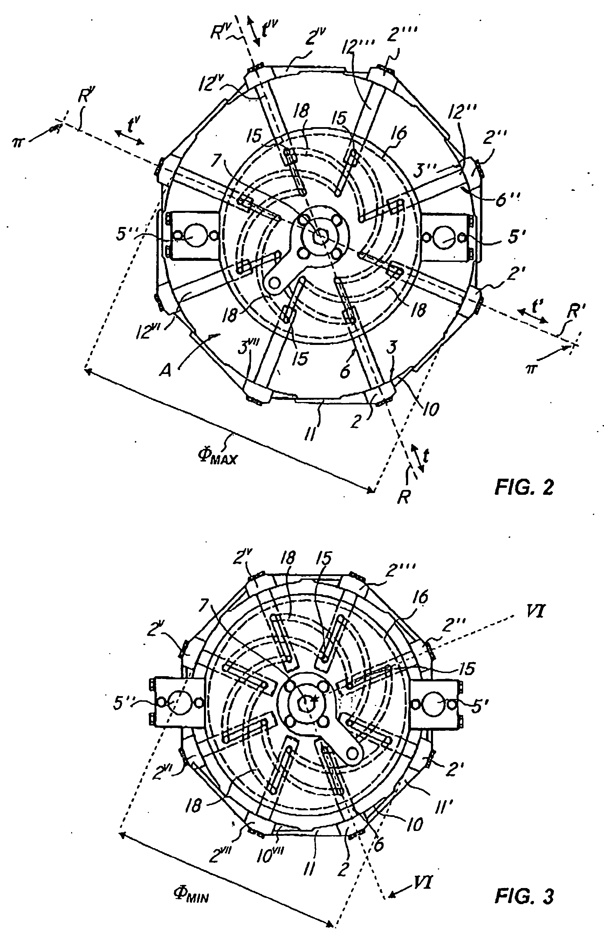

Fig. 2 and Fig. 3 show the maximum diameter φ_{MAX} and minimum diameter φ_{MIN} alignment positions of the calibrating members 2.

Particularly, the first position may define the state in which the calibrating members 2 are not in contact with the disk element D to be processed yet, and the latter is within the circumference defined by the curved surfaces 3.

The movement means 4 may promote synchronized translation t of the calibrating members 2 on their lying plane π, which may coincide with the working plane P on which the disk-like element D to be processed lies, and move them to any intermediate position between the first and second positions.

The motion imparted by the movement means 4 to each calibrating member 2 may be a simple translation t along a corresponding radial direction R, R', R",....

In an alternative configuration, not shown, each calibrating member 2 may undergo a combined motion, of rotation about a respective axis substantially orthogonal to the lying plane π, e.g. passing through the center of the above defined circumference, and translation on the plane n.

As shown in Fig. 1, the calibrating members 2 may be supported and mutually connected by a support frame 5, which may be movable above the working plane P to move the head 1 to the dough disk-like element D to be processed.

Thus, the lying plane n will substantially coincide with the working plane P and the disk-like element D will be located within the work area A that is delimited by the circumference defined by the calibrating members 2.

In a first operating mode, the frame 5 may be designed to be moved in a vertical direction only and the working plane P on which the disk element D lies may be movable.

For instance, the frame may have a vertically movable part defined by a pair of guide rods 5', 5", which are connected to the calibrating members 2 to promote translational movement thereof, and a stationary part comprising a body 5"' that is designed to act as a support and a guide for the rods 5', 5".

In another operating mode, the frame 5 may be designed to be moved both vertically and parallel to the lying plane n for the calibrating members 2, and the working plane P may be either stationary or movable.

According to a preferred, non exclusive embodiment of the present invention, the movement means 4 may include a plurality of actuators 6, 6'. 6", ... operably associated with corresponding calibrating members 2, 2', 2", ... to promote respective radial translations t thereof.

Once again, for clarity, non-indexed numbers will be used to designate each of the actuators 6, 6', 6", ... of the plurality.

Particularly, the movement means 4 may comprise a single driving shaft 7 rotating about an axis X substantially orthogonal to the lying plane π and preferably vertical, and cam means 8 interposed between the driving shaft 7 and the actuators 6.

The driving shaft 7 may be connected to any external drive or motor, not shown, to be rotated about its own axis X, and may also be susceptible of vertical translation, thereby possibly causing the vertical translational motion of the rods 5', 5".

The appropriately disposed cam means 8 may thus turn the rotary motion ω of the shaft 7 into the synchronized radial translations t of all the calibrating members 2.

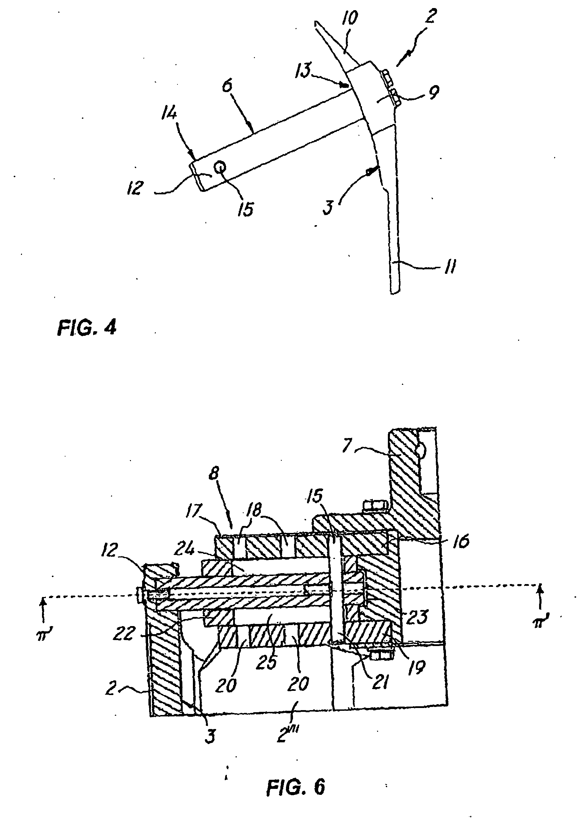

The detail of Fig. 4 shows that each calibrating member 2 may consist of an elongate body 9 having a pair of side portions 10, 11, of different lengths to define a short side portion and a long side portion respectively.

The calibrating members 2 may be aligned along the circumference so that the short side portion 10 of each calibrating member 2 lies next to the long end portion 11 of the calibrating member 2' adjacent thereto.

Furthermore, the side portions 10, 11 may be designed so that, upon translation t of the calibrating members 2, one of the side portions 10 of each calibrating member 2 may slide on the next side portion 11 of another calibrating member 2' adjacent thereto, to at least partially overlap the curvedly shaped surface 3 thereof.

Thus, each calibrating member 2 may be in contact with the disk-like element D being processed by a contact portion of its own curved surface 3 of decreasing size as it moves from the first position to the final intermediate position.

Such contact portions will define from time to time a circumference having a diameter in a range between the predetermined maximum φ_{MAX} and minimum φ_{MIN} values.

However, it shall be understood that further configurations may be provided for the calibrating members 2 other than the one as shown herein, e.g. symmetrical with respect to a respective radial moving direction R.

Also, the number of calibrating members 2 shall not be intended as a limitation to the present invention, such number being theoretically unlimited and not necessarily related to the starting or calibrated diameter of the disk-like element D to be processed.

In any case, each actuator 6 may comprise an arm 12 having a substantially radial extension, with an outer end 13 integral with the calibrating member 2 associated therewith and the opposite end 14 adapted for interaction with the cam means 8.

According to a configuration that is not shown herein, the cam means 8 may include a plurality of traditionally shaped cams, preferably as many cams as there are calibrating members 2, rotated by the common driving shaft 7 and each interacting with the end 14 of a corresponding arm 12.

In the illustrated configuration, each arm 12 may have, at its inner end 14, a first pin 15 directed substantially parallel to the axis X of the driving shaft 7 and designed to interact with the cam means 8.

According to a particularly advantageous aspect of the invention, the cam means 8 may include at least one first discoidal plate 16 which is coaxially mounted to the driving shaft 7 to be rotated integrally therewith.

The shaft 7 may be axially grooved to ensure integral transfer of the rotation ω to the plate 16.

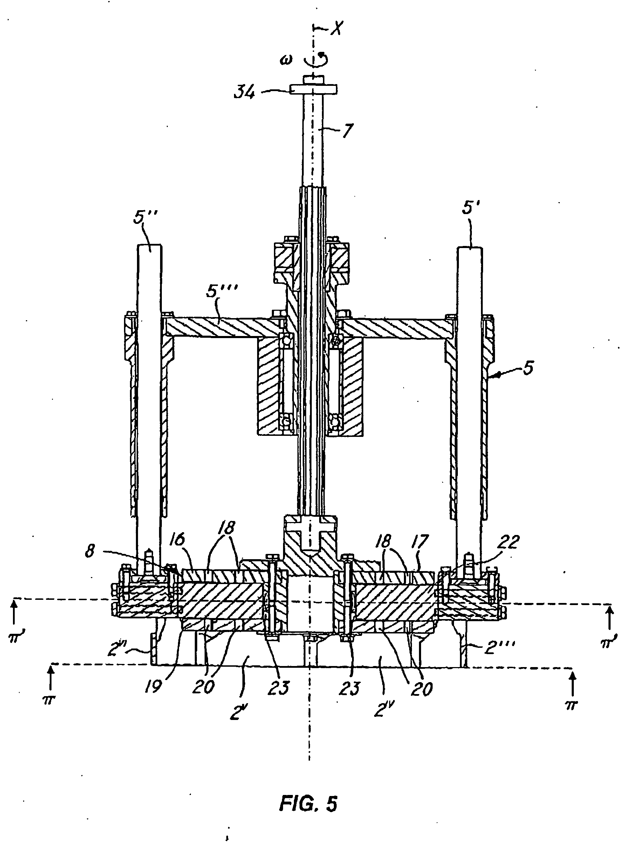

As more clearly shown by the sectional views of Fig. 5 and Fig. 6, the first plate 16 may have a first series of curved slots, generally designated by numeral 18, each slideably engageable by a first pin 15 of a corresponding arm 12.

The discolidal plate 16 may be closed at its top by a cover 17 to prevent dust and dirt accumulation in the slots 18.

According to a preferred embodiment of the invention, the cam means may include a second discoidal plate 19 having a second series of curved slots 20 in mirror relation to the slots 18 of the first series with respect to a substantially horizontal median plane n'.

Advantageously, the two discoidal plates 16, 19 may be integrated together for synchronous rotation.

Furthermore, the radial arms 12 may have, at their inner ends 14, a second pin 21, which is slideably inserted in a corresponding curved slot 20 of the second series.

Fig. 6 also shows that, in a particular construction option, the two pins 15 and 21 may be axially aligned to project from opposite sides with respect to the median plane π', and may possibly form an integral body.

Furthermore, means may be provided for radially guiding the calibrating members 2, which have the purpose of preventing them from rotating about an axis other than the center axis X of the shaft 7, thereby ensuring that the calibrating members 2 do not rotate relative to the corresponding radial directions R, R', R", ....

For instance, the radial guide means may include a disk-shaped body 22 interposed between the two plates 16, 19 and possibly in contact therewith, which will be formed with a plurality of radial guide grooves, generally designated by numeral 23, and open at their periphery to slideably accommodate a corresponding arm 12.

Each guide groove 23 may have a pair of upper and lower eyelets 24, 25 to facilitate radial sliding of the first pin 15 and the second pin 21 respectively.

The disk-shaped body may be fixed to the rods 5', 5" to ensure a constant horizontal orientation of the calibrating members 2 and allow joint vertical translation thereof.

In operation, the rotation ω imparted to the driving shaft 7 will cause integral rotation of the two discoidal plates 16, 19 and, as a result, of the slots 18, 20 of the first and second series.

Upon rotation of the slots 18, 20, the pins 15 and 21 of each column 6 will undergo a radial translation along their respective eyelets 24 and 25.

This translation movement will be transferred through the arms 12 to the corresponding calibrating members 2, that may move from the first position to an intermediate position or to the second minimum diameter φ_{MIN} position.

Simple knowledge of the eccentricity of the cams or the radius of curvature of the grooves 18, 20 will allow simple and quick control of the radial translations t of the calibrating members 2, by relating it to the degrees of rotation ω of the driving shaft 7.

Figs. 7 and 8 show a particular calibrating apparatus, generally designated by numeral 26, which comprises a plurality of calibrating heads 1, 1', 1 ", ... of the present invention.

The heads 1, 1', 1", ... may be aligned in a predetermined direction Y, e.g. substantially horizontally, above the working plane P for simultaneous operation on respective dough disk-like elements D, to obtain a considerably increased throughout of the line in which the heads 1, 1', 1", ... are incorporated.

According to the invention, the apparatus comprises actuator means 27 for driving the motion imparting means 4 for the heads 1, 1', 1", ... and is characterized in that such actuating means 27 have a common output transmission shaft, not shown, and a slider-crank mechanism 29 for connecting the transmission shaft to each of the driving shafts 7, 7', 7", ... of the calibrating heads 1, 1'. 1", ... for synchronized rotation of all the driving shafts 7, 7', 7", ... and hence synchronized translation of all the calibrating members 2 of each head 1, 1', 1", ....

For instance, the transmission shaft may be connected to a common electric motor, also not shown due to its position below the support body 30.

The slider-crank mechanism 29 may include a disk 31 driven by the drive shaft and a plurality of arms and levers, which define, for instance, a four-bar linkage 32, or other linkages with a single output bar 33 connected to all the driving shafts 7, 7', 7", ....

Nevertheless, it shall be understood that the slider-crank mechanism 29 may be designed in any known manner, to turn the rotational movement of the drive shaft into a controlled translational movement of the output bar 31 parallel to the direction Y.

Each calibrating head 1, 1', 1", ... may have a lever 34, 34', 34", ... pivoting about the axis X of the corresponding driving shaft 7, 7', 7", ... and having an arm 35, as shown in Fig. 1, which is connected to the output bar 33 so that a predetermined translation thereof will cause predetermined rotations of the driving shafts 7, 7', 7", ... of each head 1, 1', 1", ... whose value may depend on the size of each arm 35.

The apparatus may also have a second bar 36 connected to the head of each driving shaft 7, 7', 7", ... and vertically moved by a pair of mechanisms 37, 37', e.g. of the slider-crank type, or similar members such as struts or rods, driven by a third rotating bar 38 connected to a motor 39, to cause synchronized vertical translation of all the heads 1, 1', 1", ... of the apparatus 26.

The above disclosure clearly shows that the invention fulfills the intended objects and particularly meets the requirement of providing a dough disk calibrating head that provides final products whose diameter falls within a relatively wide predetermined range.

The calibrating head and apparatus of this invention are susceptible to a number of changes or variants, within the inventive concept disclosed in the appended claims. All the details thereof may be replaced by other technically equivalent parts, and the materials may vary depending on different needs, without departure from the scope of the invention.

While the head and apparatus have been described with particular reference to the accompanying figures, the numerals referred to in the disclosure and claims are only used for the sake of a better intelligibility of the invention and shall not be intended to limit the claimed scope in any manner.

## Claims

1. A head for calibrating disk-like elements (D) of edible doughs, such as pizza doughs or the like, wherein each disk-like element (D) having a predetermined starting diameter is placed on a stationary or movable working plane (P), comprising:
- a plurality of calibrating members (2, 2', 2"...) movable on a - predetermined lying plane (π) above the working plane (P), said calibrating members (2, 2', 2"...) having respective curved surfaces (3, 3', 3"...) arranged along a circumference of predetermined diameter;
- means (4) for moving said calibrating members (2, 2', 2"...) on said lying plane (π) with predetermined radial translations (t) between a first position in which said curved surfaces (3, 3', 3"...) define a maximum diameter (φ_{MAX}) of said circumference and a second position in which said curved surfaces (3, 3', 3"...) define a minimum diameter (φ_{Min}) of said circumference, in such a way to bring the diameter of the each disk-like elements (D) from the starting value to a calibrated end value; said means (4) for moving comprising a plurality of actuators (6, 6', 6"...) operably associated with corresponding calibrating members (2, 2', 2"...) of said plurality to promote the respective radial translation (t);
wherein said radial translations (t) of said calibrating members (2, 2', 2"...) are synchronized,
**characterized in that** said movement means (4) comprise:
- a driving shaft (7) connected to a drive or a motor for rotating about an axis (X) substantially orthogonal to said lying plane (π);
- cam means (8) interposed between said driving shaft (7) and said actuators (6, 6', 6"...) to turn the rotation (ω) of said driving shaft (7) into the synchronized radial translations of all the calibrating members (2, 2', 2"...) of said plurality, and further **characterized in that** said radial translations (t) of said calibrating members (2, 2', 2"...) have predetermined strokes sufficient to bring said curved surfaces (3, 3', 3"...) in an intermediate position between said first and said second position along a circumference with an intermediate diameter between said minimum value (φ_{Min}) and said maximum value (φ_{MAX}), corresponding to the calibrated diameter of the disk-like elements (D).

2. Calibrating head as claimed in claim 1, wherein each actuator (6, 6', 6"...) of said plurality has a substantially radial arm (12, 12', 12"...), with an outer end (13) solidal with a corresponding calibrating member (2, 2', 2"...) and the opposite inner end (14) designed to interact with said cam means (8).

3. Calibrating head as claimed in claim 2, **characterized in that** said cam means (8) comprise a first discoidal plate (16) coaxial with said driving shaft (7) and having a first series of curved slots (18), each of said arms (12, 12', 12"...) having at least one pin (15) slideably engaged in a corresponding slot (18) of said first series.

4. Calibrating head as claimed in any preceding claim, **characterized by** comprising radial guide means of said calibrating members (2, 2', 2"...).

5. Calibrating head as claimed in claim 4, **characterized in that** said radial guide means comprise a disk-shaped body (22) in which a plurality of substantially radial guide grooves (23) are formed, each of said guide grooves being designed to slideably house respective arms (12, 12', 12", ...) of said plurality.

6. Calibrating head as claimed in any preceding claim, **characterized in that** each of said calibrating members (2, 2', 2", ...) has a couple of side portions (10, 10', 10", ...; 11, 11', 11 ", ...), at least one of said side portions (10, 10', 10", ...) of anyone of said calibrating members (2, 2', 2", ...) being susceptible of sliding along the adjacent side portion (11, 11', 11", ...) of one adjacent calibrating member (2, 2', 2", ...), to at least partially overlap the curves surfaces (3, 3', 3", ...) of the latter and to define a circumference having a diameter which falls between said minimum (φ_{Min}) and said maximum value (φ_{MAX}).

7. An apparatus for calibrating disk-like elements of edible dough, such as pizza bases and the like, comprising a plurality of calibrating heads (1, 1', 1"...) as claimed in one or more of the preceding claims aligned along at least one predetermined direction (Y), wherein the apparatus comprises actuating means (27) of said movement means (4) of each of said heads (1, 1', 1"...), **characterized in that** said actuating means (27) comprise a common transmission shaft at their exit and a slider-crank mechanism (29) designed to connect said transmission shaft to the driving shafts (7, 7', 7"...) of each of said calibrating heads (1, 1', 1"...) for the synchronized transmission of the motion to said calibrating members (2, 2', 2"...).

## Patentansprüche

1. Kopf zum Kalibrieren von scheibenartigen Elementen (D) aus essbaren Teigen, wie zum Beispiel Pizzateigen oder dergleichen, wobei jedes scheibenartige Element (D) mit einem vorbestimmten Ausgangsdurchmesser auf eine ortsfeste oder bewegliche Arbeitsebene (P) gegeben wird, umfassend:
- eine Vielzahl von Kalibrierelementen (2, 2', 2"...), die auf einer vorbestimmten Liegeebene (π), die sich über der Arbeitsebene (P) nach oben erstreckt, beweglich sind, wobei die Kalibrierelemente (2, 2', 2" ...) jeweilige gekrümmte Oberflächen (3, 3', 3"...) aufweisen, Entlang einer Kreislinie mit vorbestimmtem Durchmesser angeordnet sind;
- Bewegungmittel (4) der Kalibrierelemente (2, 2', 2"...) auf der Liegeebene (π) mit vorbestimmten radialen Verschiebungen (t) zwischen einer ersten Position, in der die gekrümmten Oberflächen (3, 3', 3"...) einen maximalen Durchmesser (φ_{MAX}) der Kreislinie definieren, und einer zweiten Position, in der die gekrümmten Oberflächen (3, 3', 3"...) einen minimalen Durchmesser (φ_{Min}) der Kreislinie definieren, derart, dass der Durchmesser eines jeden scheibenartigen Elements (D) vom Ausgangswert auf einen kalibrierten Endwert gebracht wird;
wobei die Bewegungmittel (4) eine Vielzahl von Aktuatoren (6, 6', 6"...) funktionell vereinigt mit entsprechenden Kalibrierelemente (2, 2', 2"...) dieser Vielzahl umfasst, um die entsprechende radiale Verschiebung (t) zu fördern;
wobei die radialen Verschiebungen (t) der Kalibrierelemente (2, 2', 2"...) synchronisiert sind, **dadurch gekennzeichnet, dass** die Bewegungmittel (4) umfasst:
- eine Antriebswelle (7), die mit einem Antrieb oder einem Motor zur Drehung um eine Achse (X) im Wesentlichen orthogonal zu der Liegeebene (π) verbunden ist;
- eine Nockenmittel (8), die zwischen der Antriebswelle (7) und den Stellgliedern (6, 6', 6"...) zwischengeschaltet ist, um die Drehung (w) der Antriebswelle (7) in die synchronisierten radialen Verschiebungen aller Kalibrierelemente (2, 2', 2"...) der Vielzahl umzusetzen,
und ferner **dadurch gekennzeichnet, dass** die radialen Verschiebungen (t) der Kalibrierelemente (2, 2', 2"...) vorbestimmte Hübe aufweisen, die ausreichen, um die gekrümmten Oberflächen (3, 3', 3"...) in eine Zwischenposition zwischen der ersten und der zweiten Position entlang einer Kreislinie mit einem Zwischendurchmesser zwischen dem minimalen Wert (φ_{Min}) und dem maximalen Wert (φ_{MAX}) zu bringen, der dem kalibrierten Durchmesser der scheibenartigen Elemente (D) entspricht.

2. Kalibrierkopf nach Anspruch 1, wobei jedes Stellglied (6, 6', 6"...) der Vielzahl einen im Wesentlichen radialen Arm (12, 12', 12"...) mit einem äußeren Ende (13) aufweist, das mit einem entsprechenden Kalibrierelement (2, 2', 2"...) einheitlich ist, und wobei das entgegengesetzte innere Ende (14) so gestaltet ist, dass es mit der Nockenmittel (8) zusammenwirkt.

3. Kalibrierkopf nach Anspruch 2, **dadurch gekennzeichnet, dass** die Nockeneinrichtung (8) eine erste scheibenförmige Platte (16) aufweist, die mit der Antriebswelle (7) koaxial ist und eine erste Reihe von gekrümmten Schlitzen (18) aufweist, wobei jeder der Arme (12, 12', 12"...) mindestens einen Stift (15) aufweist, der mit einem entsprechenden Schlitz (18) der ersten Reihe gleitend im Eingriff ist.

4. Kalibrierkopf nach einem der vorhergehenden Ansprüche, **dadurch gekennzeichnet, dass** er eine radiale Führungsmittel der Kalibrierelemente (2, 2', 2"...) aufweist.

5. Kalibrierkopf nach Anspruch 4, **dadurch gekennzeichnet, dass** die radiale Führungsmittel einen scheibenförmigen Körper (22) aufweist, in dem eine Vielzahl von im Wesentlichen radialen Führungsnuten (23) gebildet sind, wobei jede der Führungsnuten so gestaltet ist, dass sie jeweilige Arme (12, 12', 12"...) der Vielzahl gleitend aufnimmt.

6. Kalibrierkopf nach einem der vorhergehenden Ansprüche, **dadurch gekennzeichnet, dass** jedes der Kalibrierelemente (2, 2', 2",...) ein paar Seitenabschnitte (10, 10', 10", ...; 11, 11', 11", ...) aufweist, wobei wenigstens einer der Seitenabschnitte (10, 10', 10", ...) von jedem der Kalibrierelemente (2, 2', 2", ...) fähig ist, entlang des angrenzenden Seitenabschnitts (11, 11', 11", ...) eines angrenzenden Kalibrierelements (2, 2', 2", ...) zu gleiten, um die gekrümmten Oberflächen (3, 3', 3", ...) des letzteren zumindest teilweise zu überlappen, und um eine Kreislinie mit einem Durchmesser zu definieren, der zwischen dem minimalen (φ_{Min}) und dem maximalen Wert (φ_{MAX}) liegt.

7. Vorrichtung zum Kalibrieren von scheibenartigen Elementen aus essbarem Teig, wie Pizzagrundlagen und dergleichen, aufweisend eine Vielzahl von Kalibrierköpfen (1, 1', 1" ...) nach einem oder mehreren der vorhergehenden Ansprüche, die entlang mindestens einer vorbestimmten Richtung (Y) ausgerichtet sind, wobei die Vorrichtung Betätigungsmittel (27) der Bewegungmittel (4) jedes der Köpfe (1, 1', 1" ...) aufweist, **dadurch gekennzeichnet, dass** die Betätigungsmittel (27) eine gewöhnliche Vorgelegewelle an ihrem Ausgang und einen Kurbelschleifenmechanismus (29) aufweist, der so gestaltet ist, dass er die Vorgelegewelle mit den Antriebswellen (7, 7', 7"...) jedes der Kalibrierköpfe (1, 1', 1"...) zur synchronisierten Übertragung der Bewegung auf die Kalibrierelemente (2, 2', 2"...) verbindet.

## Revendications

1. Une tête pour la calibration d'éléments en forme de disque (D) de pâtes comestibles, tels que des pâtes à pizza ou similaires, dans laquelle chaque élément en forme de disque (D) ayant un diamètre de départ prédéterminé est placé sur un plan de travail (P) fixe ou mobile, comprenant:
- une pluralité d'éléments de calibrage (2, 2', 2", ...) mobiles sur un plan horizontal prédéterminé (π) s'étendant supérieurement au plan de travail (P), lesdits éléments de calibrage (2, 2', 2", ...) ayant des respectives surfaces courbes (3, 3', 3"...) disposées le long d'une circonférence d'un diamètre prédéterminé;
- un moyen (4) pour déplacer lesdits éléments de calibrage (2, 2', 2", ...) sur ledit plan horizontal (π) avec des translations radiales prédéterminées (t) entre une première position dans laquelle lesdites surfaces courbes (3, 3', 3", ...) définissent un diamètre maximum (φ_{MAX}) de ladite circonférence et une seconde position dans lesquelles les surfaces courbes (3, 3', 3", ...) définissent un diamètre minimum (φ_{Min}) de ladite circonférence, de façon à amener le diamètre de chacun des éléments en forme de disque (D) de la valeur de départ à une valeur finale calibrée;
dans laquelle ledit moyen (4) de déplacement comporte une pluralité d'actionneurs (6, 6', 6", ...) associés fonctionnellement à des respectives éléments de calibrage (2, 2', 2"...) de ladite pluralité pour favoriser la translation radiale (t) des mêmes;
dans laquelle lesdites translations radiales (t) desdits éléments de calibrage (2, 2', 2", ...) sont synchronisées,
**caractérisée en ce que** ledit moyen de déplacement (4) comprend:
- un arbre d'entraînement (7) relié à un entraînement ou à un moteur pour entrer en rotation autour d'un axe (X) sensiblement perpendiculaire audit plan horizontal (π);
- un moyen de came (8) interposé entre ledit arbre d'entraînement (7) et lesdits actionneurs (6, 6', 6", ...) pour transformer la rotation (ω) dudit arbre d'entraînement (7) dans les translations radiales synchronisées de tous les éléments de calibrage (2, 2', 2", ...) de ladite pluralité,
et en outre **caractérisée en ce que** lesdites translations radiales (t) desdits éléments de calibrage (2, 2', 2", ...) ont des courses suffisantes pour amener lesdites surfaces courbes (3, 3', 3", ...) dans une position intermédiaire entre lesdites première et seconde positions le long d'une circonférence avec un diamètre intermédiaire situé entre ladite valeur minimum (φ_{Min}) et ladite valeur maximum (φ_{MAX}), correspondant au diamètre calibré des éléments en forme de disque (D).

2. Tête de calibrage selon la revendication 1, dans laquelle chaque actionneur (6, 6', 6", ...) de ladite pluralité a un bras sensiblement radial (12, 12', 12", ...), avec une extrémité extérieure (13) solidaire d'un respective élément de calibrage (2, 2', 2", ...) et l'extrémité intérieure opposée (14) conçue pour interagir avec ledit moyen de came (8).

3. Tête de calibrage selon la revendication 2, **caractérisée en ce que** ledit moyen de came (8) comprend une première plaque discoïdale (16) coaxial avec ledit arbre d'entraînement (7) et ayant une première série de fentes courbes (18), chacun desdits bras (12, 12', 12", ...) ayant au moins un pivot (15) engagé de manière coulissante avec une respective fente (18) de ladite première série.

4. Tête de calibrage selon l'une des revendications précédentes, **caractérisée en ce qu'**elle comporte un moyen de guidage radial desdits éléments de calibrage (2, 2', 2", ...).

5. Tête de calibrage selon la revendication 4, **caractérisée en ce que** ledit moyen de guidage radial comprend un corps en forme de disque (22) dans lequel sont formées une pluralité de rainures de guidage sensiblement radiales (23), chacune desdites rainures de guidage étant conçue pour loger de manière coulissante les respectifs bras (12, 12', 12", ...) de ladite pluralité.

6. Tête de calibrage selon l'une des revendications précédentes, **caractérisée en ce que** chacun desdits éléments de calibrage (2, 2', 2", ...) comporte une couple de portions latérales (10, 10', 10", ...; 11, 11', 11 ", ...), au moins une desdites portions latérales (10, 10', 10", ...) de l'un quelconque des éléments de calibrage (2, 2', 2", ...) étant apte à coulisser le long de la portion latérale adjacente (11, 11', 11", ...) d'un élément de calibrage adjacent (2, 2', 2", ...) pour au moins chevaucher les surfaces courbes (3, 3', 3", ...) de ce dernier et pour définir une circonférence ayant un diamètre se situant entre lesdites valeurs minimum (φ_{Min}) et maximum (φ_{MAX}).

7. Un appareil destiné à calibrer des éléments en forme de disque de pâte comestible, tels que des pâtes à pizza et similaires, comprenant une pluralité de têtes de calibrage (1, 1', 1 ", ...) comme revendiqué dans une ou plusieurs des revendications précédentes en alignement le long d'au moins une direction prédéterminée (Y), dans lequel l'appareil comprend un moyen d'actionnement (27) dudit moyen de déplacement (4) de chacune desdites têtes (1, 1', 1", ...), **caractérisé en ce que** ledit moyen d'actionnement (27) comprend à l'extrémité un arbre de transmission commun et un mécanisme de bielle-manivelle (29) conçu pour relier ledit arbre de transmission aux arbres d'entraînement (7, 7', 7", ...) de chacune desdites têtes de calibrage (1, 1', 1", ...) pour la transmission synchronisée du déplacement desdits éléments de calibrage (2, 2', 2", ...).
